# EUROPEAN PATENT SPECIFICATION

(11) **EP 3 587 168 B1**
(45) Date of publication and mention of the grant of the patent: **10.11.2021**
(21) Application number: 17897776.5
(22) Date of filing: 21.12.2017
(51) Int. Cl.: B60L 15/40, B60L 15/38, B60L 15/20, B61L 15/00, B61L 3/00, B61L 25/02, B61L 27/04, G06F 17/11, B61C 17/12, B61L 27/00

(54) **VEHICLE CONTROL SYSTEM, METHOD AND VEHICLE**
FAHRZEUGSTEUERUNGSSYSTEM, VERFAHREN UND FAHRZEUG
SYSTÈME DE COMMANDE DE VÉHICULE, PROCÉDÉ ET VÉHICULE

(30) Priority: 23.02.2017 JP 2017031664
(43) Date of publication of application: 01.01.2020
(73) Proprietor: Hitachi, Ltd., Tokyo 100-8280 (JP)
(72) Inventor: TSUTSUMI, Yuhi, Tokyo 100-8280 (JP); NISHINO, Takayoshi, Tokyo 100-8280 (JP); KATSUTA, Keiichi, Tokyo 100-8280 (JP); ODA, Atsushi, Tokyo 100-8280 (JP); YOKOTA, Masataka, Tokyo 100-8280 (JP); SEKIZAWA, Toshihiko, Tokyo 100-8280 (JP)
(74) Representative: Mewburn Ellis LLP
(86) International application number: PCT/JP2017/046046
(87) International publication number: WO 2018/154951

(56) References cited:
- EP-A1- 2 832 581
- EP-A1- 3 023 314
- EP-A2- 2 292 492
- JP-A- H07 132 828
- JP-A- 2013 146 166
- JP-A- 2015 116 895
- JP-A- 2015 123 892
- US-A1- 2014 005 877

## Description

### Technical Field

The present invention relates to a vehicle control system for driving a vehicle with less energy.

### Background Art

When a railway vehicle travels from a certain point to a target point according to a given target travel time, operations such as acceleration, constant speed running, coasting, and braking are performed. However, the relationship between a position and a speed of the vehicle at that time can be represented by a position-speed trajectory called a driving curve. Even when the target travel time is the same, if a driving curve to be followed by the vehicle is different, the energy required for traveling is also different. Therefore, determining a driving curve (energy-saving driving curve) with less energy consumption and controlling the vehicle according to the driving curve are effective for reducing the energy required for traveling.

There is a delay corresponding to the calculation time and the transmission time until the energy-saving driving curve is calculated and reflected in the vehicle control. When a train travels during this delay time, the calculated energy-saving driving curve will deviate from the actual position and speed of the train. When the train is accelerated or decelerated to follow the diverging driving curve, the energy saving performance and riding comfort will be reduced.

In order to reduce deviation between the calculated driving curve and the actual driving curve, a method of estimating the position and speed of the train after n seconds and calculating the driving curve after n seconds from the position and speed as a starting point is described in JP-A-2015-177695 (PTL 1). In PTL 1, it is described that "In the traffic management system 1, when the current traveling condition of the train deviates from the target run curve (energy-saving run curve) having the energy saving effect, the on-vehicle device 10 predicts the position and speed of the own train after n seconds and requests the ground device 20 to regenerate the energy-saving run curve from the position and speed of the own train after (for example, after n seconds) a set time has passed. The ground device 20 regenerates the energy-saving run curve from the position and speed of the train after n seconds."

EP-A-2832581 (PTL 2) proposes a train control device which sets an emergency brake pattern and a regular brake pattern as patterns of maximum speed according to the distance to a stopping point, and outputs a brake command when the train speed exceeds the maximum speed.

### Citation List

### Patent Literature

PTL 1: JP-A-2015-177695
PTL 2: EP-A-2832581

### Summary of Invention

### Technical Problem

The generation of an energy-saving driving curve generally involves execution of an algorithm for searching for a minimum energy consumption solution and the search takes time when a minimum energy driving curve is to be determined precisely. Conversely, when the driving curve with less energy consumption is roughly determined, the search can be completed in a short time.

In other words, when the driving curve with the lowest energy consumption is accurately determined, the energy saving performance in a section where a train can travel can be increased according to the driving curve, but there is a possibility that the position and speed of the train when calculation is completed may deviate from the calculated driving curve. On the other hand, when the driving curve with less energy consumption is determined with less precision, the train can travel according to the determined driving curve, but the energy saving performance is lower than that of the precise solution. The problem is to generate an energy-saving driving curve considering such contradictory problems.

### Solution to Problem

In order to solve the problems described above, the invention adopts the configuration described in the claims.

That is, according to the invention, there is provided a vehicle control system according to claim 1.

According to the invention, there is also provided a vehicle control system according to claim 3.

According to the invention, there is provided a vehicle control method according to claim 5.

According to the invention, there is also provided a vehicle control method according to claim 7.

### Advantageous Effects of Invention

According to the invention, it is possible to make a vehicle travel according to a driving curve with less energy consumption.

### Brief Description of Drawings

[Fig. 1] Fig. 1 is a diagram illustrating an example of a functional configuration of a driving curve calculation unit according to a first embodiment.
[Fig. 2] Fig. 2 is a diagram illustrating an example of a task of n seconds determination in the document of the related art.
[Fig. 3] Fig. 3 is a diagram illustrating an example of a relationship between a vehicle speed and a position when switching between a first driving curve and a second driving curve in the first embodiment.
[Fig. 4] Fig. 4 is a flowchart illustrating an example of driving curve generation to be output to a traveling device in the first embodiment.
[Fig. 5] Fig. 5 is a diagram illustrating an example of a state in which remaining traveling times do not match at a point where positions and speeds in the first and second driving curves match.
[Fig. 6] Fig. 6 is a diagram illustrating an example of a relationship between a vehicle speed and a position when switching between the first driving curve and the second driving curve in a second embodiment.
[Fig. 7] Fig. 7 is a diagram illustrating an example of a functional configuration of a driving curve calculation unit in the second embodiment.
[Fig. 8] Fig. 8 is a flowchart illustrating an example of driving curve determination in the second embodiment.

### Description of Embodiments

Hereinafter, embodiments of the present invention will be described based on the drawings.

### [Example 1]

In the embodiment, a case will be described where a railway vehicle travels between stations along a driving curve formed by joining two energy-saving driving curves with different precision at a certain point.

### (1) Configuration of Driving Curve Calculation Unit

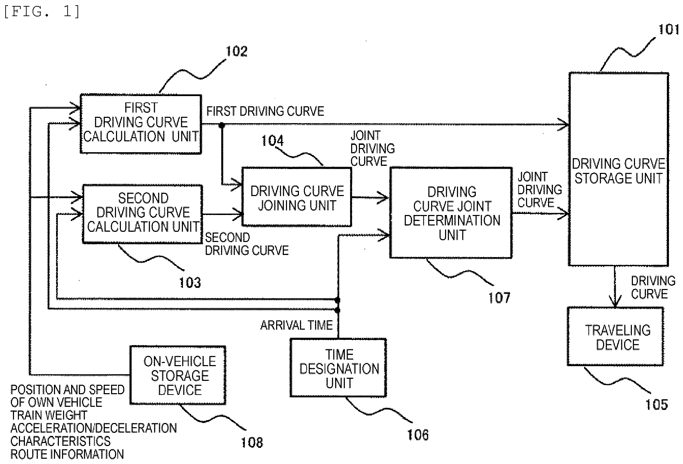

Fig. 1 is a diagram illustrating a configuration example of a vehicle control system according to a first embodiment.

A driving curve storage unit 101 outputs a target driving curve when a traveling device 105 causes a train to travel.

A first driving curve calculation unit 102 and a second driving curve calculation unit 103 acquire, from a traveling device 105 and an on-vehicle storage device 108 mounted on a vehicle (hereinafter referred to as an own vehicle), the current position and speed of the own vehicle, the train weight of the own vehicle, acceleration/deceleration characteristics of the vehicle, and route information, which are information necessary to calculate a driving curve (hereinafter referred to as an energy-saving driving curve) with low energy consumption. The remaining traveling time for the target arrival time to the next station is acquired from a time designation unit 106.

Here, a method of acquiring the current position and speed of the own vehicle may be the method usually provided by a railway vehicle and, for example, it can be realized by a method of calculating the traveling distance and speed of a vehicle from the integration with a wheel system by measuring the number of rotations and angular velocity of the wheels. The position of the train may be acquired by a global positioning system (GPS) and the traveling distance and speed of the vehicle may be obtained by the change with time of the position.

Route information is information for calculating a consumption energy driving curve and includes, for example, information such as the relationship between the position on the route and the altitude or the speed limit and the gradient.

The driving curve calculation unit 102 calculates a driving curve satisfying the remaining traveling time with the position and speed at a point where the generation of the energy-saving driving curve is started as a starting point. Here, constraints for not exceeding the speed limit are included in the driving curve generation algorithm. In order to calculate the acceleration/deceleration at the time of power running, constant speed running, coasting, and braking of the vehicle at each position, the train weight, the vehicle acceleration/deceleration characteristics, and the route information acquired from the on-vehicle storage device 108 are used. In the driving curve calculation unit 102, the time granularity and condition of the energy-saving driving curve generation algorithm are roughly set and the energy-saving driving curve is calculated in a few seconds. The generated first driving curve is output to a driving curve joining unit 104 and stored in the driving curve storage unit 101.

Similar to the driving curve calculation unit 102, the driving curve calculation unit 103 also calculates a driving curve satisfying the remaining traveling time with the position and speed of the own vehicle at a point where generation of the energy-saving driving curves read from the on-vehicle storage device 108 is started as the starting point. However, the energy-saving driving curve generation algorithm of the driving curve calculation unit 103 is different from that of the driving curve calculation unit 102. The time granularity and condition of the energy-saving driving curve generation algorithm are set precisely and the driving curve with the minimum energy consumption is calculated. The generated second driving curve is stored in the driving curve joining unit 104.

The driving curve joining unit 104 searches for a point (reference point) where the speeds match within a specific range at each position of the first driving curve and the second driving curve. This search is started even in the middle of the calculation of the second operating curve. If in the middle of the calculation, the reference point is searched in a section up to the point where the calculation is completed at that time. Then, every time the calculation completion section of the second driving curve increases, this search is sequentially performed.

The calculation of the second driving curve may start from the end point, which is the point at which the generation of the energy-saving driving curve is finished, and proceed in the direction of the starting point. Here, the reference point is searched every time the calculation completion section of the second driving curve increases. However, when a point (reference point) at which the speeds matches in a specified range is found, it is possible to complete the generation of the driving curve in the section where the driving curve is generated. As a result, it is possible to avoid the situation where, although the reference point is found, the calculation of the driving curve further on the end point side than the reference point is not completed and there is no driving curve to be followed by the vehicle. Naturally, it is not necessary to stop the calculation of the second driving curve when one reference point is found and it may be possible to calculate until the calculation reaches the starting point and find a plurality of reference points. Here, by joining the first driving curve and the second driving curve at the closest reference point among the reference points located further on the end point side than the own vehicle, it is possible to secure more sections where the vehicle travels along the second driving curve, and as a result, it is possible to reduce the energy consumption for total travel.

If there is a reference point, the driving curve joining unit 104 calculates a joint driving curve for switching from the first driving curve to the second driving curve after the reference point and outputs the joint driving curve to a driving curve joint determination unit 107. The time designation unit 106 outputs the arrival time to the driving curve joint determination unit 107. When the vehicle travels following the joint driving curve output from the driving curve joining unit 104, the driving curve joint determination unit 107 determines whether the arrival time output from the time designation unit 106 is satisfied and stores the joint driving curve in the driving curve storage unit 101 if satisfied.

The driving curve storage unit 101 outputs the stored driving curve to the traveling device 105 and the traveling device 105 instructs the train to travel according to the driving curve.

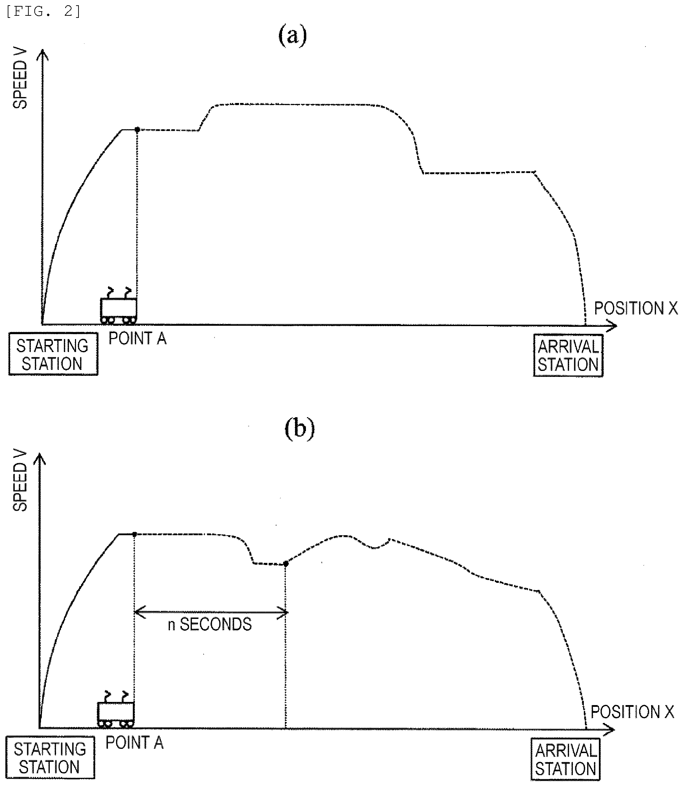

Fig. 2 is a diagram illustrating a state in which an energy-saving driving curve from a point A to a destination station is generated (a) when the driving curve, the time granularity and condition are roughly calculated and (b) when the driving curve, the time granularity and condition are precisely calculated. Here, when the driving curve is calculated immediately (in fact, calculating time is sufficiently smaller than the response speed of a drive system of the vehicle, such as about one second) with the rough time granularity and condition, as illustrated in Fig. 2(a), the vehicle can be traveled in a state where the position and speed of the vehicle do not deviate from the calculated driving curve . On the other hand, when the driving curve is calculated with the precise time granularity and condition as illustrated in Fig. 2(b), n seconds which are the time required to generate the driving curve increase. Therefore, although the driving curve after n seconds is precise and the energy saving property is higher than in the case of (a), the possibility that the position and speed of the train deviate from the calculated driving curve at the time of n seconds is increased. As a result, during the n seconds and after n seconds, it takes extra energy to travel during return from the deviation, and thus, compared to the calculation accuracy of the driving curve, the total energy consumption from the departure station to the arrival station may be larger in the case of Fig. 2(b).

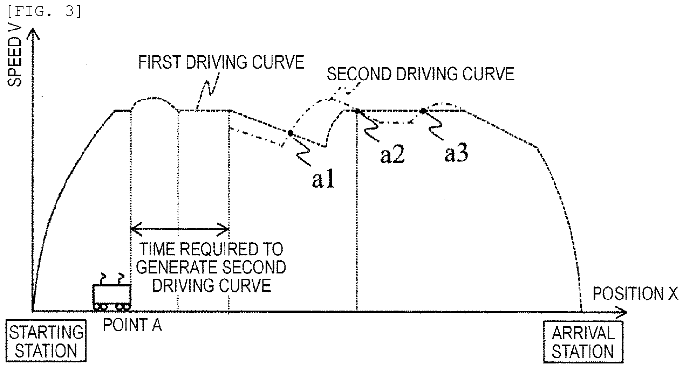

Fig. 3 is a diagram illustrating a state where the driving curve from the point A to the arrival station is calculated by two calculation units by the method according to the embodiment. In the embodiment, the first driving curve, which is an energy-saving driving curve with roughly calculated time granularity and condition, and the second driving curve, which is an energy-saving driving curve with precisely calculated time granularity and condition, are started to be generated. First, the vehicle travels according to the first driving curve and, among the points (a1 to a3 in the drawing) at which the positions and speeds match in the first and second driving curves, a reference point which can switch a tracking destination of the vehicle from the previous driving curve to the other driving curve is searched, and then, when the reference point is present, the vehicle travels from the position according to the second driving curve. Therefore, the vehicle can travel up to the reference point without deviation from the first driving curve and can travel along the second driving curve which is more energy-saving than the first driving curve beyond the reference point. As a result, the total energy consumption from the departure station to the arrival station can be smaller than when the vehicle follows only one of the first driving curve and the second driving curve.

### (2) Flowchart

Next, a flow of the process where, in the vehicle control system of the example, the calculation of the first driving curve and the second driving curve is started, the vehicle travels according to the first driving curve at first and, after the calculation of the second driving curve, the vehicle travels according to the second driving curve from the point where the first and second driving curves can be switched will be described.

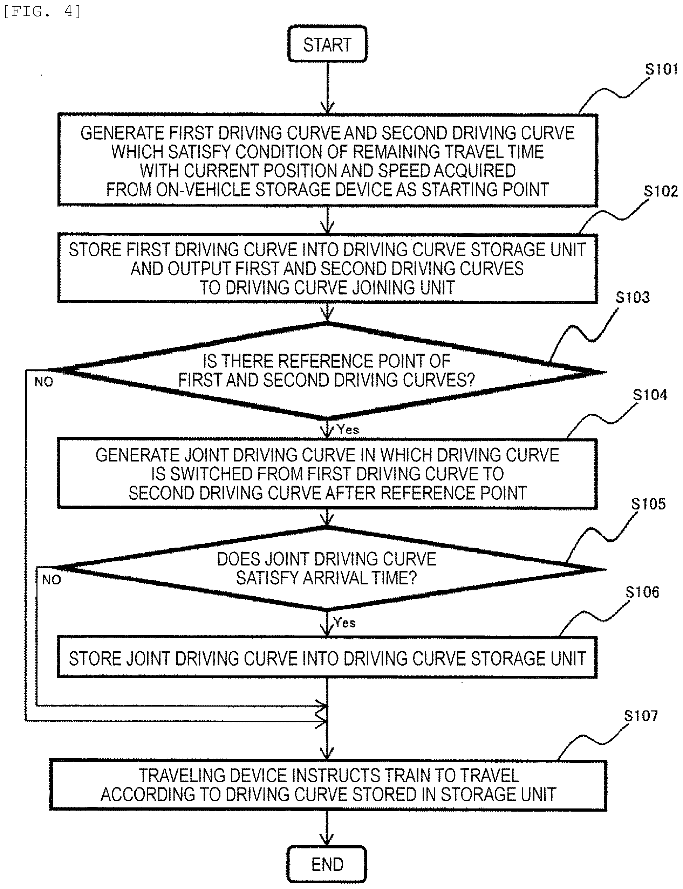

Fig. 4 is a flowchart illustrating a procedure of processing of a train control system of the embodiment.

Step S101: The first driving curve calculation unit 102 and the second driving curve calculation unit 103 acquire the current position and speed of the own vehicle, which is information necessary for generating a driving curve, from the traveling device 105 and the on-vehicle storage device 108 and the remaining traveling time to the next station from the time designation unit 106 and start generation of a driving curve satisfying the condition of the remaining traveling time with the current position and speed as the starting point.

Step S102: First, the first driving curve calculation unit 102 stores the obtained first driving curve in the driving curve storage unit 101 and at the same time outputs the obtained first driving curve to the driving curve joining unit 104. Next, the second driving curve calculation unit 103 also outputs the obtained second driving curve to the driving curve joining unit 104 at the time the second driving curve calculation unit 103 calculated part or all of the second driving curve.

Step S103: The driving curve joining unit 104 determines whether, between the first and second driving curves, there is the reference point where positions and speeds match in a specific range. Here, the specific range related to the determination of match refers to the width of a range for allowing calculation errors at least when the process is implemented by a computer. In practical terms, considering the drive characteristics of the vehicle, it is sufficient to be set to allow for a gap of the following target speed at which rapid acceleration or deceleration does not occur such that the ride quality deteriorates.

When a negative result (No) is obtained in the determination of Step S103, the process proceeds to Step S107, and when a positive result (Yes) is obtained, the process proceeds to Step S104.

Step S104: A joint driving curve is generated by joining the first and second driving curves at the reference point and is output to the driving curve joint determination unit 107.

Step S105: The driving curve joint determination unit 107 determines whether the input joint driving curve satisfies the arrival time output from the time designation unit.

When a negative result is obtained in the determination of Step S105, the process proceeds to Step S107, and when a positive result is obtained, the driving curve joint determination unit 107 outputs the joint driving curve to the driving curve storage unit 101 and the process proceeds to Step S106.

Step S106: The driving curve storage unit 101 rewrites, to the joint driving curve, the first driving curve stored in Step S102 in the driving curve storage unit 101.

Step S107: The traveling device 105 travels the train according to the driving curve stored in the driving curve storage unit 101.

In the flow of processing, when there is a plurality of reference points in Step S103, among those reference points for which a positive result is obtained by the determination of Step S105 when the processing of Step S104 and the determination of Step S105 are applied to, the reference point located closest to the front side (closer to the vehicle) is used and the process of Step S106 is applied. Therefore, it is possible to secure more sections in which the vehicle travels along the second driving curve, and as a result, it is possible to reduce the energy consumption required for total travel.

In the driving curve joining unit 104, when searching whether there is a joinable position, at each position, the terms that the speeds and the remaining traveling times match within a specific range are used as the condition. However, the condition may be determined by the punctuality required for the train.

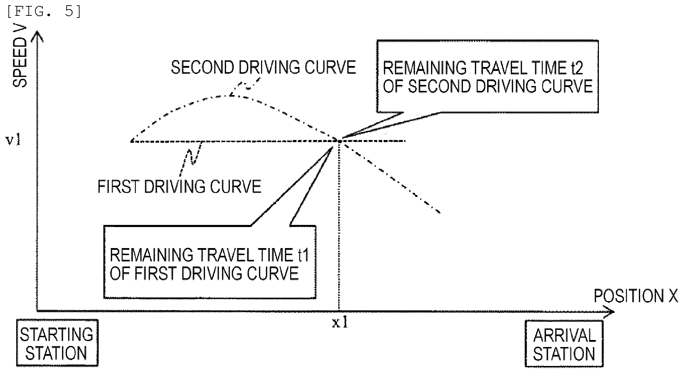

For example, Fig. 5 is a diagram illustrating a state in which the remaining traveling times do not match at the point where the positions and speeds in the first and second driving curves match. The first and second driving curves match with each other at a position X1 and a velocity V1, but the remaining traveling times do not match with t1 and t2 respectively. Here, when a difference (t1-t2) second is permitted from the viewpoint of punctuality, the point is taken as a position where joining can be performed. When it is possible to delay the station arrival time of the own vehicle due to the delay of a preceding train, the time that may be delayed may be set as the allowable value.

As described above, according to the embodiment, the calculation of the first driving curve with the roughly calculated time granularity and the and the calculation of the second driving curve with the precisely calculated time granularity and condition are generated, the vehicle travels according to the first driving curve at first, and the vehicle travels according to the second driving curve from the switchable points when there is a point at which the first and second driving curves can be switched, in such a manner that a train can travel according to the driving curves with low energy consumption.

### [Example 2]

In the present embodiment, a method will be described where a second driving curve with the time granularity and condition precisely calculated considering energy consumption is generated with the position and speed of the reference point in the middle of a first driving curve with the time granularity and condition roughly calculated considering energy consumption as the starting point. The same components as those of the first embodiment are denoted by the same reference numerals and the description thereof will be omitted.

In the first embodiment, the starting point of the second driving curve is set to the current position and speed of the vehicle. However, the second embodiment differs from the first embodiment in that the starting point of the second driving curve is set to the position and speed of a reference point in the middle of the first driving curve.

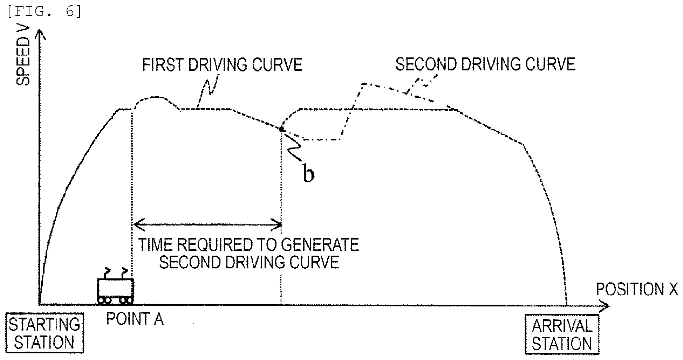

Fig. 6 is a diagram illustrating a state in which the second driving curve is generated with the position and speed (point b) of the reference point in the middle of the first driving curve as a starting point in the method according to the present embodiment. In the present embodiment, the two driving curves can be reliably connected by generating the second driving curve with the certain position and speed of the first driving curve as the starting point.

### (1) Configuration of Driving Curve Calculation Unit

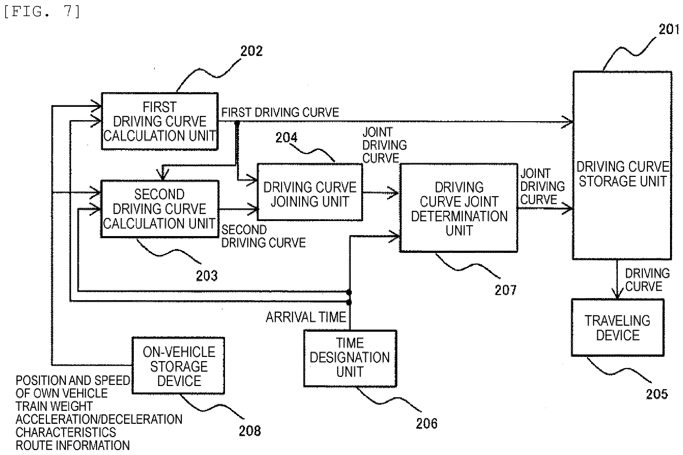

Fig. 7 is a diagram illustrating a configuration example of a train control system in the second embodiment.

A driving curve storage unit 201 outputs a driving curve to be followed when the vehicle travels.

Similar to that of the first embodiment, a first driving curve calculation unit 202 acquires the current position and speed of the own vehicle, which is the information necessary to calculate the driving curve, from a traveling device and an on-vehicle storage device of the own vehicle, the train weight of the own vehicle, acceleration/deceleration characteristics of the vehicle, and route information from the on-vehicle storage device, and the arrival time from a time designation unit 206. The remaining traveling time to a next station can be calculated from the difference between the current time and the arrival time.

The first driving curve calculation unit 202 calculates a driving curve satisfying the remaining traveling time with the position and speed at a point where the generation of the energy-saving driving curve is started as the starting point. In the first driving curve calculation unit 202, the time granularity and condition of the energy-saving driving curve generation algorithm are roughly set and the energy-saving driving curve is calculated in a few seconds, and then the generated first driving curve is output to a second driving curve calculation unit 203 and a driving curve joining unit 204 and stored in the driving curve storage unit 201.

The second driving curve calculation unit 203 generates a second driving curve with the position and speed of the reference point in the middle of the section in the first driving curve output from the first driving curve calculation unit 202 as the starting point. The energy-saving driving curve generation algorithm of the second driving curve calculation unit 203 is more precise in setting the time granularity and condition than the algorithm of the first driving curve calculation unit 202. The second driving curve calculation unit 203 also stores the generated second driving curve in the driving curve joining unit 204.

Here, the reference point in the middle of the section is a point at which the vehicle reached at the time the second driving curve calculation unit 203 finishes the calculation of the second driving curve, when the first driving curve calculation unit 202 calculates the first driving curve at first. The method of determining the reference point is not limited to here and the embodiment can be implemented when the reference point is a point (end station side) beyond the point determined by the present method. The time until the calculation of the second driving curve is finished cannot be precisely estimated considering that the time varies depending on the load condition of a computer, or the like. It is desirable from a practical point of view to set the time a little on the end point side as a margin considering fluctuation.

The driving curve joining unit 204 calculates a joint driving curve for switching the driving curve from the first driving curve to the second driving curve at the reference point and outputs the joint driving curve to a driving curve joint determination unit 207. The time designation unit 206 outputs the arrival time to a driving curve joint determination unit 207. The driving curve joint determination unit 207 determines whether the arrival time output from the time designation unit 206 is satisfied when traveling according to the joint driving curve output from the driving curve joining unit 204 and, when arrival time is satisfied, the joint driving curve is stored in the driving curve storage unit 201.

The driving curve storage unit 201 outputs the stored driving curve to a traveling device 205 and the traveling device 205 travels the train according to the driving curve.

### (2) Flowchart

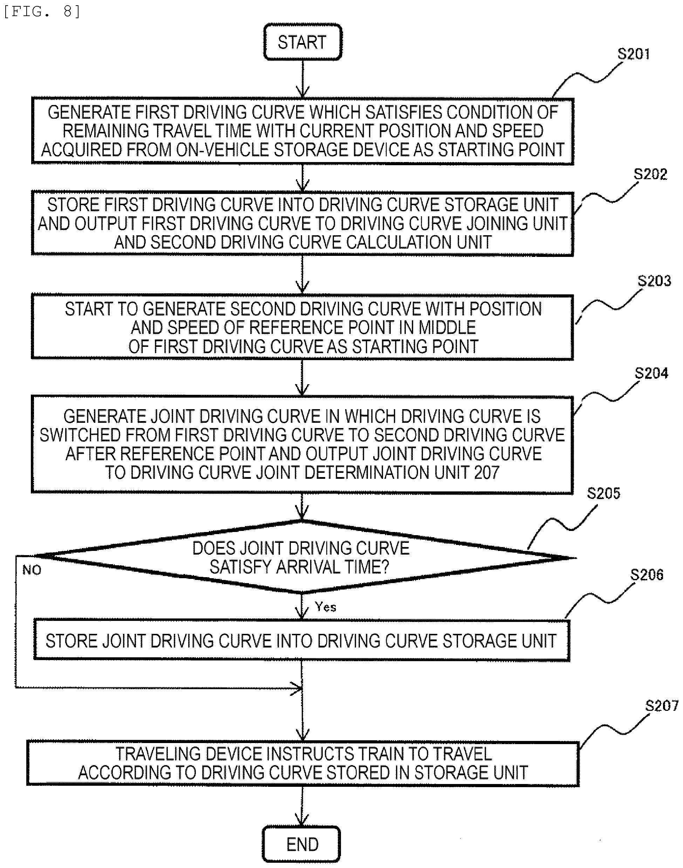

Fig. 8 is a flowchart illustrating a procedure of processing of the train control system of the embodiment.

Step S201: The first driving curve calculation unit 202 acquires the current position and speed of the own vehicle, which is information necessary for generating a driving curve, from the traveling device 205 and the on-vehicle storage device and the remaining traveling time to the next station from the time designation unit 206 and generates a first driving curve satisfying the condition of the remaining traveling time with the current position and speed as the starting point.

Step S202: The first driving curve calculation unit 202 stores the obtained first driving curve in the driving curve storage unit 201 and at the same time outputs the obtained first driving curve to the driving curve joining unit 204 and the second driving curve calculation unit 203.

Step S203: The second driving curve calculation unit 203 starts generating a second driving curve with the position and speed of the reference point in the middle of the first driving curve as the starting point.

Step S204: The driving curve joining unit 204 generates a joint driving curve in which the first driving curve is switched to the second driving curve after the reference point and outputs the joint driving curve to the driving curve joint determination unit 207.

Step S205: The driving curve joint determination unit 207 determines whether the input joint driving curve satisfies the arrival time output from time designation unit.

When a negative result (No) is obtained in the determination of Step S205, the process proceeds to Step S207, and when a positive result (Yes) is obtained, the process proceeds to Step S206.

Step S206: The driving curve storage unit 201 rewrites the first driving curve stored in the driving curve storage unit 201 in Step S202 to the joint driving curve and stores the first driving curve.

Step S207: The traveling device 205 instructs the vehicle to travel according to the driving curve stored in the driving curve storage unit 201.

As described above, according to the second embodiment, by generating the second driving curve with the position and speed at the reference point in the middle of the first driving curve as the starting point, the train can travel according to the driving curve with less energy consumption by surely switching the driving curve from the first driving curve to the second driving curve.

### Reference Signs List

- 101:: vehicle curve storage unit
- 102:: first driving curve calculation unit
- 103:: second driving curve calculation unit
- 104:: driving curve joining unit
- 105:: traveling device
- 106:: time designation unit
- 107:: driving curve joint determination unit
- 108:: on-vehicle storage device
- 201:: vehicle curve storage unit
- 202:: first driving curve calculation unit
- 203:: second driving curve calculation unit
- 204:: driving curve joining unit
- 205:: traveling device
- 206:: time designation unit
- 207:: driving curve joint determination unit
- 208:: on-vehicle storage device

## Claims

1. A vehicle control system, comprising:
a driving curve storage unit (101) which is configured to store a driving curve representing a position and speed relationship in a section on a predetermined orbit;
a traveling device (105) which is configured to instruct a vehicle to travel the section according to the driving curve read out from the driving curve storage unit;
a time designation unit (106) which is configured to define time when the vehicle arrives at an end point of the section;
a first driving curve calculation unit (102) which is configured to calculate a driving curve of the section and to store the driving curve into the driving curve storage unit; and
a second driving curve calculation unit (103) which is also configured to calculate a driving curve of the section,
**characterized in that**:
the driving curve of the section is calculated by the second driving curve calculation unit at a finer time granularity and to provide a higher energy saving compared to the driving curve of the section calculated by the first driving curve calculation unit;
and **in that** the vehicle control system further comprises:
a driving curve joining unit (104) which is configured to search for a reference point at which positions and speeds match within a specific range determined in advance between the driving curve calculated by the first driving curve calculation unit and the driving curve calculated by the second driving curve calculation unit and to generate a joint driving curve obtained by joining both driving curves at the reference point when the reference point is found; and
a driving curve joint determination unit (107) which is configured to determine whether the time determined by the time designation unit is satisfied when the vehicle travels the section according to the joint driving curve and to store the joint driving curve into the driving curve storage unit when it is determined that the time is satisfied.

2. The vehicle control system according to claim 1, wherein
the second driving curve calculation unit is configured to calculate the driving curve in a direction from the end point of the section toward a starting point of the section.

3. A vehicle control system, comprising:
a driving curve storage unit (201) which is configured to store a driving curve representing a position and speed relationship in a section on a predetermined orbit;
a traveling device (205) which is configured to instruct a vehicle to travel the section according to the driving curve read out from the driving curve storage unit;
a time designation unit (206) which is configured to define time when the vehicle arrives at an end point of the section;
a first driving curve calculation unit (202) which is configured to calculate a driving curve including a starting point of the section and a reference point in the middle and to store the driving curve into the driving curve storage unit; and
a second driving curve calculation unit (203) which is also configured to calculate a driving curve ,
**characterized in that**:
the driving curve is calculated by the second driving curve calculation unit at a finer time granularity and to provide a higher energy saving compared to the driving curve calculated by the first driving curve calculation unit; and
the driving curve is calculated by the second driving curve calculation unit to satisfy a speed at the reference point of the driving curve calculated by the first driving curve calculation unit at the reference point and to include the end point of the section; and
**in that** the vehicle control system further comprises:
a driving curve joining unit (204) which is configured to generate a joint driving curve obtained by joining the driving curve calculated by the first driving curve calculation unit and the driving curve calculated by the second driving curve calculation unit at the reference point; and
a driving curve joint determination unit (207) which is configured to determine whether the time determined by the time designation unit is satisfied when the vehicle travels the section according to the joint driving curve and to store the joint driving curve into the driving curve storage unit when it is determined that the time is satisfied.

4. A vehicle which is mounted with the vehicle control system according to any one of claims 1 to 3.

5. A vehicle control method to be executed in
a vehicle control system,
the vehicle control system including:
a driving curve storage unit (101) which is configured to store a driving curve representing a position and speed relationship in a section on a predetermined orbit;
a traveling device (105) which is configured to instruct a vehicle to travel the section according to the driving curve read out from the driving curve storage unit;
a time designation unit (106) which is configured todefines time when the vehicle arrives at an end point of the section;
a first driving curve calculation unit (102) which is configured to calculate a driving curve of the section and to store the driving curve into the driving curve storage unit; and
a second driving curve calculation unit (103) which is also configured to calculate a driving curve of the section,
**characterized in that**:
the driving curve of the section is calculated by the second driving curve calculation unit at a finer time granularity and to provide a higher energy saving compared to the driving curve of the section calculated by the first driving curve calculation unit
and **in that** the method comprises:
searching for a reference point at which positions and speeds match within a specific range determined in advance between the driving curve calculated by the first driving curve calculation unit and the driving curve calculated by the second driving curve calculation unit;
generating a joint driving curve obtained by joining both driving curves at the reference point when the reference point is found;
determining whether the time determined by the time designation unit is satisfied when the vehicle travels the section according to the joint driving curve; and
storing the joint driving curve into the driving curve storage unit when it is determined that the time is satisfied.

6. The vehicle control method according to claim 5, wherein
the second driving curve calculation unit calculates the driving curve in a direction from the end point of the section toward a starting point of the section.

7. A vehicle control method to be executed in
a vehicle control system
the vehicle control system including:
a driving curve storage unit (201) which is configured to store a driving curve representing a position and speed relationship in a section on a predetermined orbit;
a traveling device (205) which is configured to instruct a vehicle to travel the section according to the driving curve read out from the driving curve storage unit;
a time designation unit (206) which is configured to define time when the vehicle arrives at an end point of the section;
a first driving curve calculation unit (202) which is configured to calculate a driving curve including a starting point of the section and a reference point in the middle and to store the driving curve into the driving curve storage unit; and
a second driving curve calculation unit (203) which is configured to calculate a driving curve,
**characterized in that**:
the driving curve is calculated by the second driving curve calculation unit at a finer time granularity and to provide a higher energy saving compared to the driving curve calculated by the first driving curve calculation unit; and
the driving curve is calculated by the second driving curve calculation unit to satisfy a speed at the reference point of the driving curve calculated by the first driving curve calculation unit at the reference point and to include the end point of the section; and
**in that** the method comprises:
generating a joint driving curve obtained by joining the driving curve calculated by the first driving curve calculation unit and the driving curve calculated by the second driving curve calculation unit at the reference point;
determining whether the time determined by the time designation unit is satisfied when the vehicle travels the section according to the joint driving curve; and
storing the joint driving curve into the driving curve storage unit when it is determined that the time is satisfied.

## Patentansprüche

1. Fahrzeugsteuersystem, das Folgendes umfasst:
eine Fahrverlaufsspeichereinheit (101), die ausgelegt ist, um einen Fahrverlauf zu speichern, der eine Positions- und Geschwindigkeitsbeziehung in einem Abschnitt auf einer vorbestimmten Bahn darstellt;
eine Befahrvorrichtung (105), die ausgelegt ist, um ein Fahrzeug anzuweisen, den Abschnitt gemäß dem aus der Fahrverlaufsspeichereinheit ausgelesenen Fahrverlauf zu befahren;
eine Zeitangabeeinheit (106), die ausgelegt ist, um die Zeit zu definieren, zu der das Fahrzeug an einem Endpunkt des Abschnitts ankommt;
eine erste Fahrverlaufsberechnungseinheit (102), die ausgelegt ist, um einen Fahrverlauf des Abschnitts zu berechnen und den Fahrverlauf in der Fahrverlaufsspeichereinheit zu speichern; und
eine zweite Fahrverlaufsberechnungseinheit (103), die ebenso ausgelegt ist, um einen Fahrverlauf des Abschnitts zu berechnen,
**dadurch gekennzeichnet, dass**:
der Fahrverlauf des Abschnitts durch die zweite Fahrverlaufsberechnungseinheit mit einer feineren Zeitgranularität berechnet wird, um im Vergleich mit dem durch die erste Fahrverlaufsberechnungseinheit berechneten Fahrverlauf des Abschnitts eine höhere Energieeinsparung bereitzustellen;
und dass das Fahrzeugsteuersystem ferner Folgendes umfasst:
eine Fahrverlaufsverbindungseinheit (104), die ausgelegt ist, um einen Referenzpunkt zu suchen, an dem Positionen und Geschwindigkeiten innerhalb eines vorab bestimmten spezifischen Bereichs zwischen dem durch die erste Fahrverlaufsberechnungseinheit berechneten Fahrverlauf und dem durch die zweite Fahrverlaufsberechnungseinheit berechneten Fahrverlauf übereinstimmen, und einen verbundenen Fahrverlauf zu erzeugen, der durch Verbinden beider Fahrverläufe am Referenzpunkt erhalten wird, wenn der Referenzpunkt gefunden wurde; und
eine Fahrverlaufsverbindungsbestimmungseinheit (107), die ausgelegt ist, um zu bestimmen, ob die durch die Zeitangabeeinheit ermittelte Zeit erfüllt wird, wenn das Fahrzeug den Abschnitt gemäß dem verbundenen Fahrverlauf befährt, und den verbundenen Fahrverlauf in der Fahrverlaufsspeichereinheit zu speichern, wenn bestimmt wird, dass die Zeit erfüllt wird.

2. Fahrzeugsteuersystem nach Anspruch 1, wobei
die zweite Fahrverlaufsberechnungseinheit ausgelegt ist, um den Fahrverlauf in einer Richtung von dem Endpunkt des Abschnitts zu einem Startpunkt des Abschnitts zu berechnen.

3. Fahrzeugsteuersystem, das Folgendes umfasst:
eine Fahrverlaufsspeichereinheit (201), die ausgelegt ist, um einen Fahrverlauf zu speichern, der eine Positions- und Geschwindigkeitsbeziehung in einem Abschnitt auf einer vorbestimmten Bahn darstellt;
eine Befahrvorrichtung (205), die ausgelegt ist, um ein Fahrzeug anzuweisen, den Abschnitt gemäß dem aus der Fahrverlaufsspeichereinheit ausgelesenen Fahrverlauf zu befahren;
eine Zeitangabeeinheit (206), die ausgelegt ist, um die Zeit zu definieren, zu der das Fahrzeug an einem Endpunkt des Abschnitts ankommt;
eine erste Fahrverlaufsberechnungseinheit (202), die ausgelegt ist, um einen Fahrverlauf, umfassend einen Startpunkt des Abschnitts und einen Referenzpunkt in der Mitte, zu berechnen und den Fahrverlauf in der Fahrverlaufsspeichereinheit zu speichern; und
eine zweite Fahrverlaufsberechnungseinheit (203), die ebenso ausgelegt ist, um einen Fahrverlauf zu berechnen,
**dadurch gekennzeichnet, dass**:
der Fahrverlauf durch die zweite Fahrverlaufsberechnungseinheit mit einer feineren Zeitgranularität berechnet wird, um im Vergleich mit dem durch die erste Fahrverlaufsberechnungseinheit berechneten Fahrverlauf eine höhere Energieeinsparung bereitzustellen; und
dass der Fahrverlauf durch die zweite Fahrverlaufsberechnungseinheit berechnet wird, um eine Geschwindigkeit an einem Referenzpunkt des Fahrverlaufs, der durch die erste Fahrverlaufsberechnungseinheit berechnet wird, zu erfüllen und den Endpunkt des Abschnitts einzuschließen; und
dadurch dass das Fahrzeugsteuersystem ferner Folgendes umfasst:
eine Fahrverlaufsverbindungseinheit (204), die ausgelegt ist, um einen verbundenen Fahrverlauf zu erzeugen, der durch Verbinden des durch die erste Fahrverlaufsberechnungseinheit berechneten Fahrverlaufs und des durch die zweite Fahrverlaufsberechnungseinheit berechneten Fahrverlaufs an dem Referenzpunkt erhalten wird; und
eine Fahrverlaufsverbindungsbestimmungseinheit (207), die ausgelegt ist, um zu bestimmen, ob die durch die Zeitangabeeinheit ermittelte Zeit erfüllt wird, wenn das Fahrzeug den Abschnitt gemäß dem verbundenen Fahrverlauf befährt, und den verbundenen Fahrverlauf in der Fahrverlaufsspeichereinheit zu speichern, wenn bestimmt wird, dass die Zeit erfüllt wird.

4. Fahrzeug, das mit einem Fahrzeugsteuersystem nach einem der Ansprüche 1 bis 3 ausgestattet ist.

5. Fahrzeugsteuerverfahren, das in einem Fahrzeugsteuersystem auszuführen ist, wobei das Fahrzeugsteuersystem Folgendes umfasst:
eine Fahrverlaufsspeichereinheit (101), die ausgelegt ist, um einen Fahrverlauf zu speichern, der eine Positions- und Geschwindigkeitsbeziehung in einem Abschnitt auf einer vorbestimmten Bahn darstellt;
eine Befahrvorrichtung (105), die ausgelegt ist, um ein Fahrzeug anzuweisen, den Abschnitt gemäß dem aus der Fahrverlaufsspeichereinheit ausgelesenen Fahrverlauf zurückzulegen;
eine Zeitangabeeinheit (106), die ausgelegt ist, um die Zeit zu definieren, zu der das Fahrzeug an einem Endpunkt des Abschnitts ankommt;
eine erste Fahrverlaufsberechnungseinheit (102), die ausgelegt ist, um einen Fahrverlauf des Abschnitts zu berechnen und den Fahrverlauf in der Fahrverlaufsspeichereinheit zu speichern; und
eine zweite Fahrverlaufsberechnungseinheit (103), die ebenso ausgelegt ist, um einen Fahrverlauf des Abschnitts zu berechnen,
**dadurch gekennzeichnet, dass**:
der Fahrverlauf des Abschnitts durch die zweite Fahrverlaufsberechnungseinheit mit einer feineren Zeitgranularität berechnet wird, um im Vergleich mit dem durch die erste Fahrverlaufsberechnungseinheit berechneten Fahrverlauf des Abschnitts eine höhere Energieeinsparung bereitzustellen,
und dadurch dass das Verfahren Folgendes umfasst:
das Suchen nach einem Referenzpunkt, an dem Positionen und Geschwindigkeiten innerhalb eines vorab bestimmten spezifischen Bereichs zwischen dem durch die erste Fahrverlaufsberechnungseinheit berechneten Fahrverlauf und dem durch die zweite Fahrverlaufsberechnungseinheit berechneten Fahrverlauf übereinstimmen;
das Erzeugen eines verbundenen Fahrverlaufs, der durch Verbinden beider Fahrverläufe an dem Referenzpunkt erhalten wird, wenn der Referenzpunkt gefunden wird;
das Bestimmen, ob die durch die Zeitangabeeinheit ermittelte Zeit erfüllt wird, wenn das Fahrzeug den Abschnitt gemäß dem verbundenen Fahrverlauf befährt; und
das Speichern des verbundenen Fahrverlaufs in der Fahrverlaufsspeichereinheit, wenn bestimmt wird, dass die Zeit erfüllt wird.

6. Fahrzeugsteuerverfahren nach Anspruch 5, wobei
die zweite Fahrverlaufsberechnungseinheit den Fahrverlauf in einer Richtung von dem Endpunkt des Abschnitts zu einem Startpunkt des Abschnitts berechnet.

7. Fahrzeugsteuerverfahren, das in einem Fahrzeugsteuersystem auszuführen ist, wobei das Fahrzeugsteuersystem Folgendes umfasst:
eine Fahrverlaufsspeichereinheit (201), die ausgelegt ist, um einen Fahrverlauf zu speichern, der eine Positions- und Geschwindigkeitsbeziehung in einem Abschnitt auf einer vorbestimmten Bahn darstellt;
eine Befahrvorrichtung (205), die ausgelegt ist, um ein Fahrzeug anzuweisen, den Abschnitt gemäß dem aus der Fahrverlaufsspeichereinheit ausgelesenen Fahrverlauf zu befahren;
eine Zeitangabeeinheit (206), die ausgelegt ist, um die Zeit zu definieren, zu der das Fahrzeug an einem Endpunkt des Abschnitts ankommt;
eine erste Fahrverlaufsberechnungseinheit (202), die ausgelegt ist, um einen Fahrverlauf, umfassend einen Startpunkt des Abschnitts und einen Referenzpunkt in der Mitte, zu berechnen und den Fahrverlauf in der Fahrverlaufsspeichereinheit zu speichern; und
eine zweite Fahrverlaufsberechnungseinheit (203), die ebenso ausgelegt ist, um einen Fahrverlauf zu berechnen,
**dadurch gekennzeichnet, dass**:
der Fahrverlauf durch die zweite Fahrverlaufsberechnungseinheit mit einer feineren Zeitgranularität berechnet wird, um im Vergleich mit dem durch die erste Fahrverlaufsberechnungseinheit berechneten Fahrverlauf eine höhere Energieeinsparung bereitzustellen; und
dass der Fahrverlauf durch die zweite Fahrverlaufsberechnungseinheit berechnet wird, um eine Geschwindigkeit an einem Referenzpunkt des Fahrverlaufs, der durch die erste Fahrverlaufsberechnungseinheit berechnet wird, zu erfüllen und den Endpunkt des Abschnitts einzuschließen; und
dadurch dass das Verfahren Folgendes umfasst:
das Erzeugen eines verbundenen Fahrverlaufs, der durch Verbinden des durch die erste Fahrverlaufsberechnungseinheit berechneten Fahrverlaufs und des durch die zweite Fahrverlaufsberechnungseinheit berechneten Fahrverlaufs an dem Referenzpunkt erhalten wird;
das Bestimmen, ob die durch die Zeitangabeeinheit bestimmte Zeit erfüllt wird, wenn das Fahrzeug den Abschnitt gemäß dem verbundenen Fahrverlauf befährt; und
das Speichern des verbundenen Fahrverlaufs in der Fahrverlaufsspeichereinheit, wenn bestimmt wird, dass die Zeit erfüllt wird.

## Revendications

1. Système de commande de véhicule, comprenant :
une unité de stockage de courbe de conduite (101) qui est conçue pour stocker une courbe de conduite représentant une relation entre une position et une vitesse sur un tronçon sur une trajectoire prédéterminée ;
un dispositif de déplacement (105) qui est conçu pour donner l'instruction à un véhicule de parcourir le tronçon en fonction de la courbe de conduite lue à partir de l'unité de stockage de courbe de conduite ;
une unité d'indication d'heure (106) qui est conçue pour définir l'heure à laquelle le véhicule arrive au niveau d'un point de fin du tronçon ;
une première unité de calcul de courbe de conduite (102) qui est conçue pour calculer une courbe de conduite du tronçon et pour stocker la courbe de conduite dans l'unité de stockage de courbe de conduite ; et
une seconde unité de calcul de courbe de conduite (103) qui est également conçue pour calculer une courbe de conduite du tronçon,
**caractérisé en ce que** :
la courbe de conduite du tronçon est calculée par la seconde unité de calcul de courbe de conduite à une granularité temporelle plus fine et pour fournir une économie d'énergie supérieure comparativement à la courbe de conduite du tronçon calculée par la première unité de calcul de courbe de conduite ;
et **en ce que** le système de commande de véhicule comprend en outre :
une unité de jonction de courbes de conduite (104) qui est conçue pour rechercher un point de référence au niveau duquel des positions et des vitesses concordent au sein d'une plage spécifique déterminée à l'avance entre la courbe de conduite calculée par la première unité de calcul de courbe de conduite et la courbe de conduite calculée par la seconde unité de calcul de courbe de conduite et pour générer une courbe de conduite de jonction obtenue par jonction des deux courbes de conduite au niveau du point de référence lorsque le point de référence a été trouvé ; et
une unité de détermination de jonction de courbes de conduite (107) qui est conçue pour déterminer si l'heure déterminée par l'unité d'indication d'heure est satisfaite lorsque le véhicule parcourt le tronçon en fonction de la courbe de conduite de jonction et pour stocker la courbe de conduite de jonction dans l'unité de stockage de courbe de conduite lorsqu'on a déterminé que l'heure est satisfaite.

2. Système de commande de véhicule selon la revendication 1, dans lequel
la seconde unité de calcul de courbe de conduite est conçue pour calculer la courbe de conduite dans une direction partant du point de fin du tronçon vers un point de départ du tronçon.

3. Système de commande de véhicule, comprenant :
une unité de stockage de courbe de conduite (201) qui est conçue pour stocker une courbe de conduite représentant une relation entre une position et une vitesse sur un tronçon sur une trajectoire prédéterminée ;
un dispositif de déplacement (205) qui est conçu pour donner l'instruction à un véhicule de parcourir le tronçon en fonction de la courbe de conduite lue à partir de l'unité de stockage de courbe de conduite ;
une unité d'indication d'heure (206) qui est conçue pour définir l'heure à laquelle le véhicule arrive au niveau d'un point de fin du tronçon ;
une première unité de calcul de courbe de conduite (202) qui est conçue pour calculer une courbe de conduite incluant un point de départ du tronçon et un point de référence au centre et pour stocker la courbe de conduite dans l'unité de stockage de courbe de conduite ; et
une seconde unité de calcul de courbe de conduite (203) qui est également conçue pour calculer une courbe de conduite,
**caractérisé en ce que** :
la courbe de conduite est calculée par la seconde unité de calcul de courbe de conduite à une granularité temporelle plus fine et pour fournir une économie d'énergie supérieure comparativement à la courbe de conduite calculée par la première unité de calcul de courbe de conduite ; et
la courbe de conduite est calculée par la seconde unité de calcul de courbe de conduite pour satisfaire une vitesse au niveau du point de référence de la courbe de conduite calculée par la première unité de calcul de courbe de conduite au niveau du point de référence et pour inclure le point de fin du tronçon ; et
**en ce que** le système de commande de véhicule comprend en outre :
une unité de jonction de courbes de conduite (204) qui est conçue pour générer une courbe de conduite de jonction obtenue en joignant la courbe de conduite calculée par la première unité de calcul de courbe de conduite et la courbe de conduite calculée par la seconde unité de calcul de courbe de conduite au niveau du point de référence ; et
une unité de détermination de jonction de courbes de conduite (207) qui est conçue pour déterminer si l'heure déterminée par l'unité d'indication d'heure est satisfaite lorsque le véhicule parcourt le tronçon en fonction de la courbe de conduite de jonction et pour stocker la courbe de conduite de jonction dans l'unité de stockage de courbe de conduite lorsqu'il est déterminé que l'heure est satisfaite.

4. Véhicule qui est monté avec le système de commande de véhicule selon l'une quelconque des revendications 1 à 3.

5. Procédé de commande de véhicule devant être exécuté dans un système de commande de véhicule,
le système de commande de véhicule incluant :
une unité de stockage de courbe de conduite (101) qui est conçue pour stocker une courbe de conduite représentant une relation entre une position et une vitesse sur un tronçon sur une trajectoire prédéterminée ;
un dispositif de déplacement (105) qui est conçu pour donner l'instruction à un véhicule de parcourir le tronçon en fonction de la courbe de conduite lue à partir de l'unité de stockage de courbe de conduite ;
une unité d'indication d'heure (106) qui est conçue pour définir l'heure à laquelle le véhicule arrive au niveau d'un point de fin du tronçon ;
une première unité de calcul de courbe de conduite (102) qui est conçue pour calculer une courbe de conduite du tronçon et pour stocker la courbe de conduite dans l'unité de stockage de courbe de conduite ; et
une seconde unité de calcul de courbe de conduite (103) qui est également conçue pour calculer une courbe de conduite du tronçon,
**caractérisé en ce que** :
la courbe de conduite du tronçon est calculée par la seconde unité de calcul de courbe de conduite à une granularité temporelle plus fine et pour fournir une économie d'énergie supérieure comparativement à la courbe de conduite du tronçon calculée par la première unité de calcul de courbe de conduite
et **en ce que** le procédé comprend :
la recherche d'un point de référence au niveau duquel des positions et vitesses concordent au sein d'une plage spécifique déterminée à l'avance entre la courbe de conduite calculée par la première unité de calcul de courbe de conduite et la courbe de conduite calculée par la seconde unité de calcul de courbe de conduite ;
la génération d'une courbe de conduite de jonction obtenue en joignant les deux courbes de conduite au niveau du point de référence lorsque le point de référence a été trouvé ;
la détermination du fait que l'heure déterminée par l'unité d'indication d'heure est satisfaite lorsque le véhicule parcourt le tronçon en fonction de la courbe de conduite de jonction ; et
le stockage de la courbe de conduite de jonction dans l'unité de stockage de courbe de conduite lorsqu'il est déterminé que l'heure est satisfaite.

6. Procédé de commande de véhicule selon la revendication 5, dans lequel la seconde unité de calcul de courbe de conduite calcule la courbe de conduite dans une direction allant du point de fin du tronçon vers un point de départ du tronçon.

7. Procédé de commande de véhicule devant être exécuté dans un système de commande de véhicule,
le système de commande de véhicule incluant :
une unité de stockage de courbe de conduite (201) qui est conçue pour stocker une courbe de conduite représentant une relation entre une position et une vitesse sur un tronçon sur une trajectoire prédéterminée ;
un dispositif de déplacement (205) qui est conçu pour donner l'instruction à un véhicule de parcourir le tronçon en fonction de la courbe de conduite lue à partir de l'unité de stockage de courbe de conduite ;
une unité d'indication d'heure (206) qui est conçue pour définir l'heure à laquelle le véhicule arrive au niveau du point de fin du tronçon ;
une première unité de calcul de courbe de conduite (202) qui est conçue pour calculer une courbe de conduite incluant un point de départ du tronçon et un point de référence au centre et pour stocker la courbe de conduite dans l'unité de stockage de courbe de conduite ; et
une seconde unité de calcul de courbe de conduite (203) qui est conçue pour calculer une courbe de conduite,
**caractérisé en ce que** :
la courbe de conduite est calculée par la seconde unité de calcul de courbe de conduite à une granularité temporelle plus fine et pour fournir une économie d'énergie supérieure comparativement à la courbe de conduite calculée par la première unité de calcul de courbe de conduite ; et
la courbe de conduite est calculée par la seconde unité de calcul de courbe de conduite pour satisfaire une vitesse au niveau du point de référence de la courbe de conduite calculée par la première unité de calcul de courbe de conduite au niveau du point de référence et pour inclure le point de fin du tronçon ; et
**en ce que** le procédé comprend :
la génération d'une courbe de conduite de jonction obtenue en joignant la courbe de conduite calculée par la première unité de calcul de courbe de conduite et la courbe de conduite calculée par la seconde unité de calcul de courbe de conduite au niveau du point de référence ;
la détermination du fait que l'heure déterminée par l'unité d'indication d'heure est satisfaite lorsque le véhicule parcourt le tronçon en fonction de la courbe de conduite de jonction ; et
le stockage de la courbe de conduite de jonction dans l'unité de stockage de courbe de conduite lorsqu'il est déterminé que l'heure est satisfaite.
